# EUROPEAN PATENT SPECIFICATION

(11) **EP 2 763 409 B1**
(45) Date of publication and mention of the grant of the patent: **23.10.2019**
(21) Application number: 14153282.0
(22) Date of filing: 30.01.2014
(51) Int. Cl.: H04N 21/2187, H04N 21/238, H04N 21/431, H04N 21/485, H04N 7/18, G08B 13/196, H04N 5/232

(54) **Systems and methods for managing access to surveillance cameras**
Systeme und Verfahren zur Verwaltung des Zugriffs auf Überwachungskameras
Systèmes et procédés de gestion d'accès à des caméras de surveillance

(30) Priority: 31.01.2013 AU 2013900299
(43) Date of publication of application: 06.08.2014
(73) Proprietor: Honeywell International Inc., Morris Plains, NJ 07950 (US)
(72) Inventor: Worrill, Joshua, Newtown, New South Wales 2042 (AU); Palmer, Sally-Anne, Lane Cove, New South Wales 2066 (AU); Hou, Holly, Morristown, NJ New Jersey 07962 (US); Boyes, Craig, Glenhaven, New South Wales 2156 (AU); Flannery, Mark, Turramurra, New South Wales 2074 (AU)
(74) Representative: Houghton, Mark Phillip

(56) References cited:
- WO-A1-2012/174603
- US-A1- 2009 079 831
- US-A1- 2010 304 731
- US-A1- 2011 193 966
- US-A1- 2012 113 265
- US-B1- 7 859 571
- Anonymous: "Lesson 32: View-Based Controls", , 31 December 2007 (2007-12-31), XP055498064, Retrieved from the Internet: URL:http://www.yevol.com/bcb/Lesson32.htm [retrieved on 2018-08-07]
- Anonymous: "Practical Learning Series - Borland C++ Builder", , 31 December 2007 (2007-12-31), XP055498071, Retrieved from the Internet: URL:http://www.yevol.com/bcb/ [retrieved on 2018-08-07]

## Description

### FIELD OF THE INVENTION

The present invention relates to systems and methods for managing video data, and more specifically to systems and methods for managing access to surveillance cameras. Embodiments of the invention have been particularly developed for managing user access to cameras in a Digital Video Management (DVM) system, for example in the context of providing user interfaces which enable convenient access to desired cameras. While some embodiments will be described herein with particular reference to that application, it will be appreciated that the invention is not limited to such a field of use, and is applicable in broader contexts.

### BACKGROUND

Any discussion of the background art throughout the specification should in no way be considered as an admission that such art is widely known or forms part of common general knowledge in the field.

Digital Video Management (DVM) systems are widely used for purposes such as surveillance. Such systems allow an operator to view live video data from a plurality of cameras. For example, some DVM systems make use of a DVM model whereby a plurality of cameras are assigned to a plurality camera servers (on a ≥1:1 basis), with each camera server being configured to make available (for live viewing or recording purposes) video data from an assigned one or more cameras. The camera servers are all centrally managed by a DVM database server.

Patent document US2009/0079831 discloses a Digital Video Management (DVM) system. For tracking objects of interest it proposes the use of a table indicating pre-associations among cameras thus enabling automated identification of auxiliary cameras related to a given primary camera.

In sites with a large number of cameras (for example more than 1,000 cameras), there are significant challenges in providing quick and convenient access to a desired one or more cameras. Such quick and convenient access is in some cases crucial, for example during an incident or emergency, or in the context of system configuration and/or health monitoring.

There is a need in the art for improved systems and methods for managing access to surveillance cameras.

### SUMMARY OF THE INVENTION

The present invention in its various aspects is as set out in the appended claims. It is an object of the present invention to overcome or ameliorate at least one of the disadvantages of the prior art, or to provide a useful alternative.

One embodiment provides a method for providing access to live video data from a plurality of cameras in a DVM system, the method including:
maintaining data indicative of cameras in a hierarchical structure;
receiving, from a user of a client terminal, a command indicative of:
   (i) an instruction to generate a multi-camera view; and
   (ii) a defined selection of cameras defined by reference to the hierarchical structure;
in response to the command, defining a camera workspace view for rendering at the client terminal, wherein the camera workspace view is configured to provide a plurality of video display objects that are respectively configured to display live video data from the defined selection of cameras.

One embodiment provides a method wherein the hierarchical structure is defined by a tree structure including a plurality of nodes, and wherein the command is indicative of a user-selected one or more of the nodes, wherein the defined selection of cameras consists of all cameras nested beneath the user-selected one or more nodes.

One embodiment provides a method wherein the camera workspace view is defined by a plurality of workspace pages, with the number of workspace pages being defined based upon the quantity of cameras in the defined selection of cameras.

One embodiment provides a method wherein the camera workspace view is configured to, when rendered at the client terminal, periodically cycle between the plurality of workspace pages.

One embodiment provides a method wherein including, upon rendering of the camera workspace view at the client terminal, managing streaming characteristics of the defined selection of cameras based on a predefined protocol.

One embodiment provides a method wherein the predefined protocol operates thereby to enable streaming at a first rate for a first set of the defined selection of cameras and a second rate that is less bandwidth intensive than the first rate for a second set of the defined selection of cameras.

One embodiment provides a method wherein the first set includes cameras currently displayed on-screen client terminal, and the second set includes cameras currently represented in the camera workspace view but not currently displayed on-screen at the client terminal.

One embodiment provides a method including a step of enabling a user to save the camera workspace view.

One embodiment provides a method including a step of enabling a user to modify the camera workspaces view by one or more of the following: adding one or more additional cameras; removing one or more cameras; resizing the video display objects.

One embodiment provides a method including selecting a video display object size based on one or more characteristics of the defined selection of cameras.

One embodiment provides a method for providing access to live video data from a plurality of cameras in a DVM system, the method including:
maintaining, for each camera, data indicative of relatedness scores for one or more other cameras in the DVM system;
monitoring user activity in the DVM system;
maintaining d rata indicative of a set of observable actions and a score adjustment rule; and
upon monitoring one of the observable actions relating to a target camera and a second camera, updating, for the target camera, the relatedness score for the second camera based on the score adjustment rule.

One embodiment provides a method including providing a user interface component configured to display, for a camera in respect of which live video data is currently being displayed, data indicative of cameras having the highest relatedness scores for that camera.

One embodiment provides a method wherein, for a given camera, the score adjustment rules include any one or more of the following:
a rule to increase the relatedness score where a camera is viewed immediately preceding the given camera;
a rule to increase the relatedness score where a camera is viewed immediately following the given camera; and
a rule to increase the relatedness score where a camera is viewed concurrently with the given camera.

One embodiment provides a method for providing access to live video data from a plurality of cameras in a DVM system, the method including:
monitoring a user interface component that is configured to provide one or more video display objects, wherein each video display object is configured to provide live video data for an associated one of the cameras;
identifying, for a given one of the cameras for which one of the video display object is configured to provide live video data, a set of related cameras; and
updating a related cameras display object thereby to display data indicative of the set of related cameras.

One embodiment provides a DVM system configured to perform a method as described herein.

One embodiment provides a tangible non-transitive carrier medium carrying computer executable code that, when executed via one or more processes, allows the performance of a method as described herein.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

### BRIEF DESCRIPTION OF THE DRAWINGS

Embodiments of the invention will now be described, by way of example only, with reference to the accompanying drawings in which:
FIG. 1 schematically illustrates a DVM system according to one embodiment.
FIG. 2 schematically illustrates a DVM system according to one embodiment.
FIG. 3 illustrates a method according to one embodiment.
FIG. 4 schematically illustrates on-screen and off-screen portions of a camera workspace view.

### DETAILED DESCRIPTION

Described herein are systems and methods for managing video data. Embodiments are described by reference to a Digital Video Management (DVM) system, which operates in conjunction with a user interface configured to provide providing a user with access to view live feed from cameras in the DVM system. In overview, some embodiments relate to technology for generating multi-camera views in the user interface (being views including video display objects for a plurality of the cameras). Some embodiments relate to generation and maintenance of camera relationships, thereby to enable to provision of a "related camera" display, which allows the user to quickly locate potentially relevant cameras based on a current situational context.

### SYSTEM LEVEL OVERVIEW

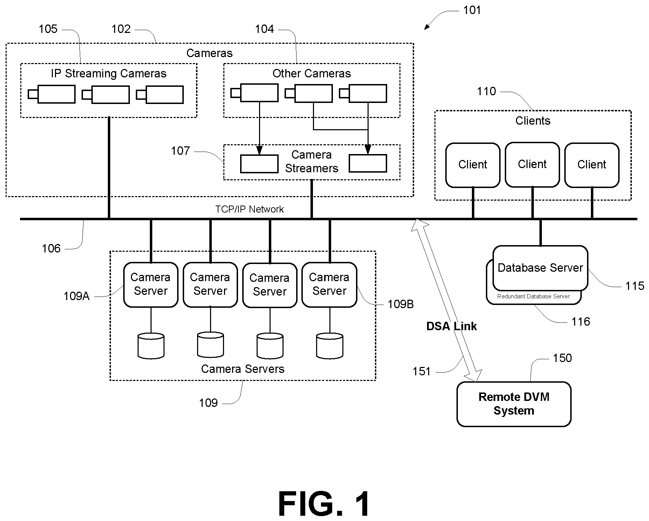

FIG. 1 illustrates a general Digital Video Management (DVM) system 101. System 101 is described to provide general context to various embodiments discussed below. Although embodiments are described by reference to DVM systems based on system 101, the present invention is not limited as such. That is, system 101 is provided as a general example to highlight various features of an exemplary DVM system. In practice, many systems omit one or more of these features, and/or include additional features.

System 101 includes a plurality of video streaming units 102. Units 102 include conventional cameras 104 (including analogue video cameras) coupled to discrete video streaming units, and IP streaming cameras 105. Video streaming units 102 stream video data, presently in the form of surveillance footage, on a TCP/IP network 106. This is readily achieved using IP streaming cameras 105, which are inherently adapted for such a task. However, in the case of other cameras 104 (such as conventional analogue cameras), a discrete video streaming unit 107 is required to convert a captured video signal into a format suitable for IP streaming.

For the purposes of the present disclosure, the term "video streaming unit" should be read to include IP streaming cameras 105 and video streaming units 107. That is, the term "video streaming unit" describes any hardware component configured to stream video data onto a network, independent of the source of the originating analogue video data.

For the present purposes, the terms "video streaming unit" and "camera" are generally used interchangeably, on the assumption that each video streaming unit corresponds to a unique set of optical components used to capture video. That is, there is a one-to-one relationship between streaming units 107 and cameras 104. However, in other embodiments there is a one-to-many relationship between streaming units 107 and cameras 104 (i.e. a streaming unit is configured for connection to multiple cameras).

One or more camera servers 109 are also connected to network 106 (these may be either physical servers or virtual servers). Each camera server is enabled to have assigned to it one or more of video streaming units 102. In some embodiments the assignment is on a stream-by-stream basis rather than a camera-by-camera basis. This assignment is carried out using a software-based configuration tool, and it follows that camera assignment is virtual rather than physical. That is, the relationships are set by software configuration rather than hardware manipulation. In practice, each camera has a unique identifier. Data indicative of this identifier is included with surveillance footage being streamed by that camera such that components on the network are able to ascertain from which camera a given stream originates.

In the present embodiment, camera servers are responsible for making available both live and stored video data. In relation to the former, each camera server provides a live stream interface, which consists of socket connections between the camera manager and clients. Clients request live video through the camera server's COM interfaces and the camera server then pipes video and audio straight from the relevant streaming unit to the client through TCP sockets. In relation to the latter, each camera server has access to a data store for recording video data. Although FIG. 1 suggests a one-to-one relationship between camera servers and data stores, this is by no means necessary. Each camera server also provides a playback stream interface, which consists of socket connections between the camera manager and clients. Clients create and control the playback of video stored that the camera server's data store through the camera manager's COM interfaces and the stream is sent to clients via TCP sockets.

Although, in the context of the present disclosure, there is discussion of one or more cameras or streaming units being assigned to a common camera server, this is a conceptual notion, and is essentially no different from a camera server being assigned to one or more cameras or streaming units.

Clients 110 execute on a plurality of client terminals, which in some embodiments include all computational platform on network 106 that are provided with appropriate permissions. Clients 110 provide a user interface (UI) that allows surveillance footage to be viewed in real time by an end-user. For example, one UI component is a render window, in which streamed video data is rendered for display to a user. In some cases this user interface is provided through an existing application (such as Microsoft Internet Explorer), whilst in other cases it is a standalone application. The user interface optionally provides the end-user with access to other system and camera functionalities, including mechanical, digital and optical camera controls, control over video storage, and other configuration and administrative functionalities (such as the assignment and reassignment of cameras to camera servers). Typically clients 110 are relatively "thin", and commands provided via the relevant user interfaces are implemented at a remote server, typically a camera server. In some embodiments different clients have different levels of access rights. For example, in some embodiments there is a desire to limit the number of users with access to change configuration settings or mechanically control cameras.

System 101 also includes a DVM database server 115. Database server 115 is responsible for maintaining various information relating to configurations and operational characteristics of system 101, and for managing events within the system. In terms of events, the general notion is that an action in the system (such as the modification of data in the database, or the reservation of a camera, as discusses below) causes an event to be "fired" (i.e. published), this having follow-on effects depending on the nature of the event.

In the present example, the system makes use of a preferred and redundant database server (115 and 116 respectively), the redundant server essentially operating as a backup for the preferred server. The relationship between these database servers is generally beyond the concern of the present disclosure.

Some embodiments of the present invention are directed to distributed DVM systems, also referred to as "distributed system architecture" (DSA). In general terms, a distributed DVM system includes a plurality of (i.e. two or more) discrete DVM systems, such as system 101. These systems are discrete in the sense that they are in essence standalone systems, able to function autonomously without the other by way of their own DVM servers. They may be distributed geographically (for example in different buildings, cities or countries), or notionally (in a common geographic location, but split due to individual system constraints, for example camera server numbers, or simply to take advantage of benefits of a distributed architecture). In the context of FIG. 1, a remote system 150, communicates with the local system via a DSA link 151. For the present purposes, it is assumed that remote system 150 is in a general sense similar to the local system. Various components (hardware and software) are configured to allow communications between the systems, for example via a network connection (including, but not limited to, an Intranet or Internet connection), or other communications interface. For the sake of the present embodiments, it is assumed that the inter-system communications occur by way of TCP/IP connections, and in this manner any communications channel supporting TCP/IP may be used.

### EXEMPLARY USER INTERFACE

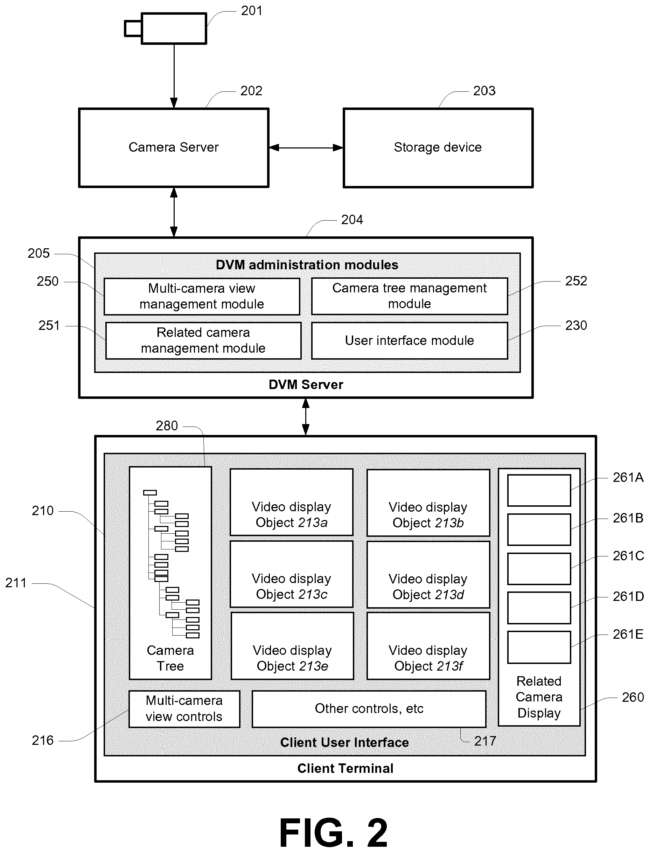

FIG. 2 illustrates components of an exemplary DVM system (such as the system of FIG. 1), but simplified to illustrate components relevant to a user interface.

A camera 201 is associated with a camera server 202. Camera server 202 is configured to access video data made available by camera 201, either for live viewing or for recording to a storage device 203. Camera server 202 is configured/controlled by a DVM server 204. There are typically a large number of cameras and camera servers configured/controlled by DVM server 204 (although only one is shown in FIG. 2).

DVM server 204 executes a plurality of DVM administration modules 205. The functional block for modules 205 is used to simplistically represent a wide range of software components implemented within a DVM system. Only a selection of these are shown, being:
- A multi-camera view management module 250. As discussed further below, this provides functionality relevant to the creation and management of multi-camera views in user interfaces at client terminals.
- A related camera management module 251. This module maintains data indicative of, for each camera, one or more "related cameras", and preferably operates on the basis of an ongoing learning algorithm thereby define and prioritize such relationships. Additional detail is provided further below.

- A camera tree management module 252. This module is responsible for maintaining a hierarchical data structure (or multiple such structures) thereby to define pre-configured camera relationships, for example based on locations in a facility or the like.
- A user interface module 230, which is configured to deliver user interface components to a plurality of client terminals (for example via a server to web-browser relationship).

DVM server 204 communicates with a user interface 210 which executes on a client terminal 211. In the present embodiment, this user interface is provided via module 230 via a web-server type arrangement (i.e. user interface 210 is provided via a web-browser at terminal 211 which renders data transmitted by server 211). In this manner, module 230 is configured to allow a plurality of terminals 211 to independently provide respective instantiations user interface 210 for a respective plurality of operators.

User interface 210 is configured to display live and recorded video data to a user via a video display objects (and, in some embodiments, other DVM content such as screenshots, maps, and the like). In the example of FIG. 2, a plurality of video display objects are shown as being rendered on-screen simultaneously. This is described herein as a "multi-camera view". Specifically, the term "multi-camera view" is used to describe a camera workspace area of a user interface that displays a plurality of video display objects, each of these being configured to display live video data from an associated camera. In FIG. 2, the camera workspace displays six video display objects (213a to 213f). There may be additional video display objects that are not shown (but would be revealed via a scrolling operation). These are defined in the camera workspace, but not viewed on-screen at the instant of FIG. 2.

User interface 210 provides various controls 217 (which simplistically represents a variety of GUI controls available to an operator of terminal 211, such as record control, camera position control, camera view selection, and so on).

User interface 210 also provides a camera tree 280 (supported by module 252), which groups cameras of the DVM system into a hierarchical tree structure. It will be appreciated that a variety of tree structures may be used, and that the groupings may be configured in a variety of ways (for example grouping based on locations in a facility, groupings based on purpose, and so on). In any case, the tree structure includes a plurality of expandable/collapsible nodes, and cameras are nested beneath these noted. Selecting a given node results in selection of all cameras underlying that node (directly or indirectly).

A multi-camera view control object 216 provides controls relevant to the formation, accessing and/or management of multi camera views. This is discussed in more detail further below. In some cases such control is achieved via "right-click" functionalities or the like, as opposed to necessitating a discrete portion of the screen devoted to an object for containing such controls.

A related camera display 260, discussed in more detail further below, provides data indicative of a set of "related cameras". In the case of FIG. 2, this provides preview video display objects 261A to 261E, which provide live view from a set of related cameras determined via the operation of module 251.

### MANAGEMENT OF MULTI-CAMERA VIEWS

A DVM system, for example in the context of a security system, requires a large amount of configuration in order to be used effectively. This often includes the creation of a camera structure (for example a tree structure), and also the pre-creation of specifically-defined multi-camera views, which allow the user to call up multiple cameras at one time that are useful in their specific security scenarios. The creation of these views is time intensive and also usually static - the creator needs to have a good understanding of the site and the upcoming security needs in order to create the correct views containing the cameras the operators will need. As the site changes or new needs arise, new views can be necessary requiring further configuration which may incur a site more costs in maintenance.

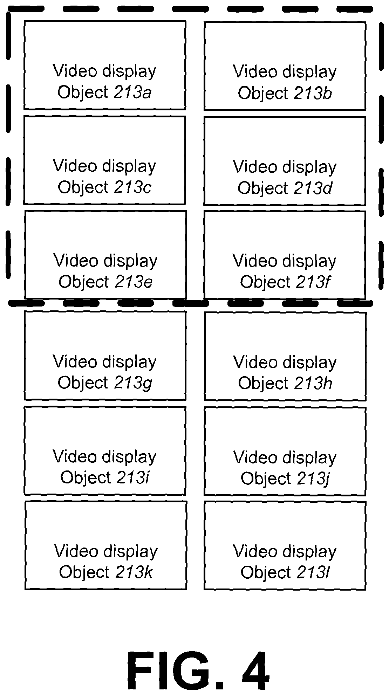

In overview, technology described herein enables a method for on the fly creation of multi-camera views using tree structure 280. Specifically, a user is enabled to select a set of cameras in tree structure 280 (for example by selecting one or more nodes, and/or by selecting one or more individual cameras), and then operating controls 216 thereby to create a multi-camera view containing those cameras. Module 250 is configured to determine an appropriate layout for a multi-camera view (for example based on the number of cameras, available screen area for a camera workspace view, and based on user-defined parameters) and then define video display objects associated with the relevant cameras. In some cases the multi-camera view is larger than the available screen area for a camera workspace view. In such cases either or both of the following is used:
- A scrollable camera workspace view is defined, with only a selection of the contained video display objects being visible. This is shown in FIG. 4, with video display objects 213a to 213f being shown on-screen in FIG. 2, and video display objects 213g to 2131 being rendered in the user interface but not on-screen. In some embodiments throttling is applied to off-screen video display objects so that they stream at a standby (low) rate thereby to conserve resources such as bandwidth.
- Multiple camera workspace views are defined, and these are cycled for display in the user interface. For example, there may be four pages, each containing a maximum of six video display objects, and these are cycled either at predefined time intervals and/or upon user command. Again, video display objects in pages that are not on screen are configured to commence steaming upon instantiation of the multi camera view, but may stream at a throttled standby rate until actually viewed on-screen.

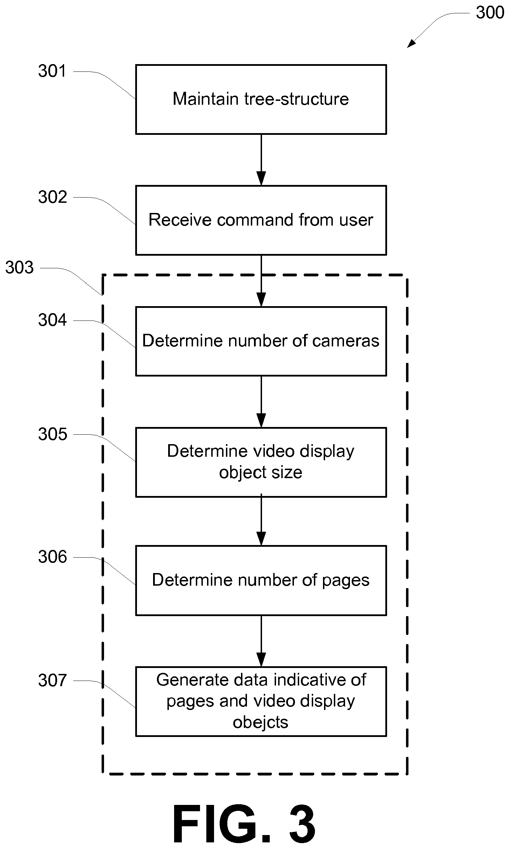

One embodiment provides a method 300 for providing access to live video data from a plurality of cameras in a DVM system, as shown in FIG. 3. Functional block 301 represents a process including maintaining data indicative of cameras in a hierarchical structure. Preferably this tree structure is generated during configuration of the DVM system. Functional block 302 represents a process including receiving, from a user of a client terminal, a command indicative of:
(i) an instruction to generate a multi-camera view; and
(ii) a defined selection of cameras defined by reference to the hierarchical structure.

This command is referred to as a "multi-camera view command", and may include a command to create a new multi camera view based on the selected cameras, or add the selected cameras to an existing multi camera view. Preferably the hierarchical structure is defined by a tree structure including a plurality of nodes, and wherein the command is indicative of a user-selected one or more of the nodes, wherein the defined selection of cameras consists of all cameras nested beneath the user-selected one or more nodes.

In response to the command, functional block 303 represents a process including defining a camera workspace view for rendering at the client terminal. This is preferably performed by module 250. The camera workspace view is configured to provide a plurality of video display objects that are respectively configured to display live video data from the defined selection of cameras. Functional block 303 includes the following sub-processes:
- Sub-process 304: determination of a number of video display objects. This preferably corresponds directly to the number of cameras selected.
- Sub process 305: determination of a video display object size. This is based on a plurality of criteria, and an associated algorithm. The criteria preferably include the available amount of screen area at the client terminal (defined in terms of pixels), the number of display objects, and user preferences. Other criteria may also be used.
- Sub-process 306: determination of a number of pages. This is preferably based upon the number of cameras, determined video display object size, the amount of screen area, and a set of maximum page threshold conditions (which may be determined based upon the preceding factors). For example, in some embodiments a given camera workspace view cannot be scrolled, and hence there is a clear maximum number of video display objects that can fit, given their size and the available screen area.
- Sub-process 307: creation of objects and pages. This includes instantiating the individual video display objects and their connections to the relevant camera servers that support the cameras for which live video is to be streamed.

Module 250 preferably allows for a defined multi-camera view to be saved for subsequent use. This is preferably saved so as to be associated with the creating user/workstation operating the user interface, so that individual users (or individual workstations) can customize their own multi-camera views. Preferably multi-camera views are able to be shared between users and/or workstations.

It will be appreciated that the method of FIG. 3 may be implemented thereby to enable one-click creation of a view including all cameras from one facility location, selection and creation of a view including multiple disparate cameras from one or more facility locations, and/or freeform creation or modification of a view of any configuration using multiple cameras.

Beyond the clear advantages in terms of DVM system customization, the method of FIG. 3 is also of utility in the context of camera health checks (whereby a user physically inspects the feed from each individual camera to assess whether the camera is operational and correctly directed). Specifically, by selecting the top node of the camera tree, and instructing to generate a multi camera view, the system automatically created a camera health check view containing every camera in the system. Through selection of a location lower in the tree (e.g. a level, or a section) the operator can run a health check for a smaller part of the facility, allowing operators to complete the task in tandem, or for pieces of the task to be completed at different times.

In some embodiments, during a health check, the system would show a portion of the cameras at a suitable viewing size, and automatically create other pages of cameras that would cycle past the operator using a set cycle time. This allows:
- Camera health check - the operator can review the health of each camera, ensuring that it is providing video and is not showing an error state.
- Camera video quality check - the operator can review the quality of the video image.
- Camera field of view check - the operator can check the camera is pointing in the right direction.

In some embodiments, while programmed to automatically cycle through cameras to provide a complete health check, the system is configured to automatically pause cycling based on user interaction. For example, the operator may wish to use the pan, tilt, zoom or preset functionality on the camera to correct an error in field of view. If the user begins this process, the system is configured to pause cycling to ensure the operator can complete their work. The operator can then re-start the cycling process when they are happy to continue.

It will be appreciated that the system must manage the performance, given that extremely large numbers of cameras can be added to a camera health check or multi-camera view. A DVM system cannot typically perform affectively if, say, one thousand cameras are trying to stream at one time. Therefore, the system is preferably configured to provide a throttling mechanism as described above to ensure that only cameras in view or about to come into view are streaming to normal effect (so that the operator does not need to wait for a connection, slowing down the process).

In some embodiments the tree structure is configured to enable a user, with one or a few interactions, to select cameras from one or more locations. Using multiple simple interactions (single click, double click, drag) they can send these cameras to view in different ways, such as:
- adding a given camera to a view;
- showing a camera across the entire view (i.e. on every page);
- adding a collection of cameras to an existing (saved) multi-camera view; and
- creating a new multi-camera view using a collection of cameras.

In some embodiments, sources other than a tree structure may be used. For example, this could be any of a number of things such as another camera collection, a list, cameras linked to a map location, an alarm group, and so on.

In some embodiments, each video display object provides (directly or by association) a camera views inside the workspace view. Each camera view preferably provides functionality related to the camera that the operator can manipulate to complete tasks. For example, in the case of the camera health check, PTZ and preset functionality would be available to allow the operator to correct field of view issues. Also, video quality functionality may be available to allow the operator to correct video quality issues.

### RELATED CAMERA MANAGEMENT

Some embodiments provide technology thereby to enable provide a related camera display 260. In general terms, a "related camera display" is a user interface component configured to display data indicative of one or more cameras (for example names, details and/or a live video preview) that are determined to be "related" to a camera being viewed in a primary camera workspace (which may include a multi-camera view as shown in FIG. 2). The term "related camera" is used to describe a camera determined to be "related" subject to the operation of a relationship determination module, which is configured to perform analysis for each camera in a DVM system thereby to identify, for that camera, one or more related cameras.

As context, security systems generally have a fixed structure of cameras from which the operator must select cameras to view (e.g. a tree structure as shown in FIG. 2). These are generally structured based on the physical location of a camera. These trees can contain upwards of 1000 cameras in, often in complicated structures. Each time a new camera is required, the user must return to the tree, find it and send it to view. The user must understand from their current position, what camera is likely to be used next based on their experience, or hopefully an efficient camera tree structure which allows for quick access to relevant cameras.

Also, other relationships between cameras not based on close proximity can be important for browsing efficiency, depending on the site. Some examples might be:
- key cameras that are often viewed in succession;
- cameras in pre-determined guard tour paths;
- cameras related to previous nearby incidents.

Unless a tree is well defined taking into account all security needs, it is likely that the operator must browse the tree for a number of seconds to find the camera they need. Also, these relationships can change over time as incidents come and go, meaning that some new relationships are not captured by the tree structure.

With this in mind, related camera management module 251 is configured to maintain data indicative of related cameras for each camera in a DVM system. These may include cameras which have some kind of important relationship to a given camera.

In some embodiments, a learning algorithm is applied thereby to enable identification of camera relationships on an ongoing basis based upon user interaction with the DVM system. For example, one approach is to maintain, for each camera, a "relatedness score" for other cameras in the system. Those cameras with the highest relatedness score are displayed in display 260. Criteria for adding to a relatedness score for a target camera may be based upon any one or more of the following:
- Viewing of a camera successively prior or following the target camera. Cameras commonly viewed successively prior or following obtain relatively higher relatedness scores.
- Cameras viewed simultaneously with the target camera (either in the context of a pre-configured multi-camera view, on-the-fly, or otherwise).
- Cameras for which recorded video is exported together with video from the target camera.

The system in this manner is configured to learn relationships over time. Additionally, in some embodiments configuration data is used to impact upon relatedness scores, for example based upon specific user input, relative camera locations, and so on.

The presently described approach to camera relationships is advantageous in the sense that, if a security system can recommend important related cameras to the user, they can move from camera to camera much quicker than using their own searching and experience to find the next camera. This can be crucial when tracking a suspect from camera to camera, and allows operators to adapt to a new facility without needing to develop extensive experiential knowledge of camera and location relationships.

In some cases a list of related cameras can also double as an expanded security view including video display objects. In such cases, given that video representations are used, there are more cameras in the user's view and any situation identified in these cameras can be acted upon much faster than a camera hidden in a tree.

In some cases display 260 includes a scrolling panel displayed beside the video area in a surveillance system. The panel includes small video display objects representing each related camera. When a camera is displayed or focused in the main workspace area, the cameras shown in the "related" panel changes to that context.

### CONCLUSIONS AND INTERPRETATION

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The term memory unit as used herein, if clear from the context and unless explicitly stated otherwise, also encompasses a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one of more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code.

Furthermore, a computer-readable carrier medium may form, or be included in a computer program product.

In alternative embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

Note that while some diagrams only show a single processor and a single memory that carries the computer-readable code, those in the art will understand that many of the components described above are included, but not explicitly shown or described in order not to obscure the inventive aspect. For example, while only a single machine is illustrated, the term "machine" shall also be taken to include any collection of machines that individually or jointly execute a set (or multiple sets) of instructions to perform any one or more of the methodologies discussed herein.

Thus, one embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

The software may further be transmitted or received over a network via a network interface device. While the carrier medium is shown in an exemplary embodiment to be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to included, but not be limited to, solid-state memories, a computer product embodied in optical and magnetic media; a medium bearing a propagated signal detectable by at least one processor of one or more processors and representing a set of instructions that, when executed, implement a method; a carrier wave bearing a propagated signal detectable by at least one processor of the one or more processors and representing the set of instructions a propagated signal and representing the set of instructions; and a transmission medium in a network bearing a propagated signal detectable by at least one processor of the one or more processors and representing the set of instructions.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the above description of exemplary embodiments of the invention, various features of the invention are sometimes grouped together in a single embodiment, FIG., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

## Claims

1. A method for providing access to live video data from a plurality of cameras in a DVM system, the method including:
maintaining, for each camera, data indicative of relatedness scores for one or more other cameras in the DVM system;
providing functionality via the user interface thereby to enable convenient access to one or more cameras with highest relatedness scores for a camera that is currently being viewed by a user; and
monitoring user activity in the DVM system,
**characterised by**:
maintaining data indicative of a set of observable actions and a set of score adjustment rules; and
upon monitoring one of the observable actions relating to a target camera and a second camera, updating, for the target camera, the relatedness score for the second camera based on the score adjustment rules.

2. A method according to claim 1, wherein the method includes providing a user interface component configured to display, for a camera in respect of which live video data is currently being displayed, data indicative of cameras having the highest relatedness scores for that camera.

3. A method according to claim 1, wherein the method includes for a given camera, the score adjustment rules include any one or more of the following:
a rule to increase the relatedness score where a camera is viewed immediately preceding the given camera;
a rule to increase the relatedness score where a camera is viewed immediately following the given camera; and
a rule to increase the relatedness score where a camera is viewed concurrently with the given camera.

4. A method according to claim 1, wherein the method includes:
monitoring a user interface component that is configured to provide one or more video display objects, wherein each video display object is configured to provide live video data for an associated one of the cameras;
identifying, for a given one of the cameras for which one of the video display object is configured to provide live video data, a set of related cameras; and
updating a related cameras display object thereby to display data indicative of the set of related cameras.

5. A DVM system comprising means for performing a method as claimed in any of the preceding claims.

## Patentansprüche

1. Verfahren zum Bereitstellen von Zugriff auf Live-Videodaten von mehreren Kameras in einem DVM-System, wobei das Verfahren Folgendes umfasst:
Pflegen für jede Kamera von Daten, die Verbundenheitspunktzahlen für eine oder mehrere weitere Kameras im DVM-System angeben;
Bereitstellen einer Funktionalität mittels der Anwenderschnittstelle, um dadurch einen komfortablen Zugang zu einer oder mehreren Kameras mit höchsten Verbundenheitspunktzahlen für eine Kamera, die gegenwärtig durch einen Anwender betrachtet wird, zu ermöglichen; und
Überwachen von Anwenderaktivität im DVM-System,
**gekennzeichnet durch**
Pflegen von Daten, die einen Satz beobachtbarer Aktionen und einen Satz von Punktzahlanpassungsregeln angeben; und
nach dem Beobachten einer der beobachtbaren Aktionen in Bezug auf eine Zielkamera und eine zweite Kamera Aktualisieren für die Zielkamera der Verbundenheitspunktzahl für die zweite Kamera auf der Grundlage der Punktzahlanpassungsregeln.

2. Verfahren nach Anspruch 1, wobei das Verfahren ein Bereitstellen einer Anwenderschnittstellenkomponente enthält, die konfiguriert ist, für eine Kamera, in Bezug auf die Live-Videodaten gegenwärtig angezeigt werden, Daten anzuzeigen, die Kameras angeben, die die höchsten Verbundenheitspunktzahlen für diese Kamera besitzen.

3. Verfahren nach Anspruch 1, wobei das Verfahren für eine gegebene Kamera die Punktzahlanpassungsregeln enthält, die Folgendes enthalten:
eine Regel, die Verbundenheitspunktzahl zu erhöhen, wobei eine Kamera unmittelbar vor der gegebenen Kamera betrachtet wird; und/oder
eine Regel, die Verbundenheitspunktzahl zu erhöhen, wobei eine Kamera unmittelbar nach der gegebenen Kamera betrachtet wird; und/oder
eine Regel, die Verbundenheitspunktzahl zu erhöhen, wobei eine Kamera gleichzeitig mit der gegebenen Kamera betrachtet wird.

4. Verfahren nach Anspruch 1, wobei das Verfahren Folgendes umfasst:
Überwachen einer Anwenderschnittstellenkomponente, die konfiguriert ist, ein oder mehrere Videoanzeigeobjekte zu liefern, wobei jedes Videoanzeigeobjekt konfiguriert ist, Live-Videodaten für eine zugeordnete Kamera zu liefern;
Identifizieren für eine gegebene Kamera, für die ein Videoanzeigeobjekt dazu konfiguriert ist, Live-Videodaten zu liefern, eines Satzes verbundener Kameras; und
Aktualisieren eines Anzeigeobjekts für verbundene Kameras, um dadurch Daten anzuzeigen, die den Satz verbundener Kameras angeben.

5. DVM-System, das Mittel zum Durchführen eines Verfahrens nach einem der vorhergehenden Ansprüche umfasst.

## Revendications

1. Procédé permettant de donner accès à des données vidéo en direct en provenance d'une pluralité de caméras dans un système de type DVM, le procédé comportant :
la tenue à jour, pour chaque caméra, de données indiquant des scores de parenté pour une ou plusieurs autres caméras dans le système de type DVM ;
la fourniture d'une fonctionnalité par le biais de l'interface utilisateur de manière à permettre un accès commode à une ou plusieurs caméras dotées des scores de parenté les plus élevés pour une caméra actuellement visionnée par un utilisateur ; et
la surveillance d'une activité d'utilisateur dans le système de type DVM,
**caractérisé par** :
la tenue à jour de données indiquant un ensemble d'actions observables et un ensemble de règles d'ajustement de score ; et
lors de la surveillance d'une des actions observables relatives à une caméra cible et à une deuxième caméra, l'actualisation, pour la caméra cible, du score de parenté pour la deuxième caméra sur la base des règles d'ajustement de score.

2. Procédé selon la revendication 1, lequel procédé comporte la fourniture d'un composant d'interface utilisateur configuré pour afficher, pour une caméra relativement à laquelle des données vidéo en direct sont actuellement affichées, des données indiquant des caméras dotées des scores de parenté les plus élevés pour cette caméra.

3. Procédé selon la revendication 1, lequel procédé comporte, pour une caméra donnée, les règles d'ajustement de score comportant au moins une quelconque des règles suivantes :
une règle d'accroissement du score de parenté dans le cas où une caméra est visionnée immédiatement avant la caméra donnée ;
une règle d'accroissement du score de parenté dans le cas où une caméra est visionnée immédiatement après la caméra donnée ; et
une règle d'accroissement du score de parenté dans le cas où une caméra est visionnée simultanément à la caméra donnée.

4. Procédé selon la revendication 1, lequel procédé comporte :
la surveillance d'un composant d'interface utilisateur qui est configuré pour fournir un ou plusieurs objets d'affichage vidéo, chaque objet d'affichage vidéo étant configuré pour fournir des données vidéo en direct pour une caméra associée parmi les caméras ;
l'identification, pour une caméra donnée parmi les caméras pour laquelle l'un des objets d'affichage vidéo est configuré pour fournir des données vidéo en direct, d'un ensemble de caméras apparentées ; et
l'actualisation d'un objet d'affichage de caméras apparentées de manière à afficher des données indiquant l'ensemble de caméras apparentées.

5. Système de type DVM comprenant des moyens de mise en œuvre d'un procédé selon l'une quelconque des revendications précédentes.
